# EUROPÄISCHE PATENTSCHRIFT

(11) **EP 1 675 197 B1**
(45) Veröffentlichungstag und Bekanntmachung des Hinweises auf die Patenterteilung: **28.05.2008**
(21) Anmeldenummer: 04029303.7
(22) Anmeldetag: 10.12.2004
(51) Int. Cl.: H01M 2/10, H01M 10/46, H01M 10/48, B60S 5/06

(54) **Batteriesystem, insbesondere für Züge**
Battery system, especially for trains
Système de batterie, en particulier pour des trains

(43) Veröffentlichungstag der Anmeldung: 28.06.2006
(73) Patentinhaber: Hoppecke Batterie Systeme GmbH, 59929 Brilon (DE)
(72) Erfinder: Czernietzki, Hans-Peter, 47809 Krefeld (DE)
(74) Vertreter: Stenger, Watzke & Ring

(56) Entgegenhaltungen:
- EP-A- 0 662 725
- EP-A- 1 006 597
- DE-A1- 4 422 005
- DE-U- 1 855 446
- GB-A- 191 026 696
- US-A1- 2001 052 433
- US-A1- 2003 213 121
- US-A1- 2004 245 031

## Beschreibung

Die Erfindung betrifft ein Modulsystem, insbesondere für die Wagen eines Zuges.

Batteriesysteme der vorbekannten Art sind aus dem Stand der Technik als solche bekannt. Sie bestehen zumeist aus einem Gehäuse, welches der Aufnahme einer Batterie, insbesondere eines Akkumulators, sowie gegebenenfalls einer Ladeeinrichtung für den Akkumulator dient. Das Gehäuse wird samt der darin angeordneten Batterie zumeist unterhalb eines Wagens oder eines Waggons eines Zuges angeordnet und dient im Notfall dazu, den Waggon oder Wagen des Zuges mit Strom zu versorgen.

Im Rahmen der Zusammenstellung eines Zuges aus unterschiedlichen Waggons oder Wagen wird vom Rangierpersonal der ordnungsgemäße Zustand der eingesetzten Batterien überprüft. Ergibt diese Überprüfung, daß eine Batterie defekt ist, so wird aus Praktikabilitätsgründen nicht die Batterie, sondern der gesamte Wagen bzw. Waggon ausgetauscht. Der ausgetauschte Waggon bzw. Wagen kommt sodann in die Wartung, wo die defekte Batterie gegen eine neue Batterie ausgetauscht wird. Der Austausch einer Batterie kann deshalb vom Rangierpersonal nicht vorgenommen werden, weil die Ladeeinrichtung des Batteriesystems hinsichtlich ihrer Leistung auf die zur Ladeeinrichtung gehörige Batterie abgestimmt ist. Ein Austausch der Batterie setzt mithin die Kenntnis über die Leistungsmerkmale sowohl der Ladeeinrichtung als auch der Batterie voraus. Zudem müssen in Abhängigkeit der verwendeten Ladeeinrichtung zum Teil unterschiedliche Batterien eingesetzt werden. Je nach Wagen oder Waggon können mithin unterschiedliche Batterien zum Einsatz kommen, deren Vorhaltung schon aus organisatorischen Gründen für das Rangierpersonal nicht möglich ist. Aus diesem Grunde werden die Waggons oder Wagen eines Zuges zwecks Austausch einer defekten Batterie in die Wartung gegeben. Zudem hat sich bei den aus dem Stand der Technik bekannten Batteriesystemen der Austausch einer defekten Batterie als äußerst aufwendig herausgestellt. Der Austauschvorgang nimmt in der Regel mehrere Minuten in Anspruch, so daß es weniger Zeit kostet, den Wagen oder Waggon des Zuges mit der defekten Batterie umzurangieren, als die defekte Batterie gegen eine neue Batterie auszutauschen. Zwar mag es insgesamt aufwendiger und damit auch kostenintensiver sein, einen Waggon oder Wagen eines Zuges auszurangieren und zwecks Austausch einer defekten Batterie in die Wartung zu geben, doch wird dies in Kauf genommen, da das Rangierpersonal beim Zusammenstellen eines Zuges unter erheblichem Zeitdruck steht. Wird nämlich die für das Zusammenstellen eines Zuges vorkalkulierte Zeit nicht eingehalten, so kommt es unweigerlich zu ungewollten Verspätungen des Zuges, die sich im schlimmsten Fall auf das gesamte Streckennetz ausdehnen können.

Das vorbeschriebene Prüf- und Auswechselsystem ist ersichtlich äußerst aufwendig, denn bedarf es zum einen umfangreicher Rangierarbeiten sowie zum anderen separat durchzuführender Wartungstätigkeiten. Da der Waggon oder Wagen bis auf die defekte Batterie dem Grunde nach einsatzbereit ist, ist das vorbeschriebene Prüf- und Austauschsystem zudem außerordentlich kostspielig.

US 2004/245031 A1 offenbart eine Hybrid-Stromversorgungsvorrichtung zur Benutzung in elektrisch betriebenen Fahrzeugen, z.B. für Gabelstapler. Die Vorrichtung ist so konstruiert, daß sie den Platz einer herkömmlichen Batterie in dem jeweiligen Fahrzeug einnehmen kann, also austauschbar ist. In der Vorrichtung ist eine Brennstoffzelle, die als eine Ladeeinrichtung dient, mit einem Energiespeicher, z.B. einer Batterie, kombiniert. Die Batterie ist von der Brennstoffzelle räumlich getrennt. Zwischen der Brennstoffzelle und der Batterie ist ein Konverter angeordnet. Die Vorrichtung umfaßt somit mindestens drei räumlich voneinander getrennte Aufnahmebereiche.

US 2001/052433 A1 beschreibt eine Hybrid-Stromversorgungseinheit, die in das Batterieabteil eines elektrisch angetriebenen Fahrzeuges eingesetzt werden kann. Die Einheit umfaßt ein Gehäuse, eine Batterie und eine Brennstoffzelle, die als Ladeeinrichtung angesehen wird. Zusätzlich sind ein Controller und eine Steckverbindung zum Versorgen des Fahrzeugs mit der erzeugten elektrischen Energie und eine weitere Steckverbindung als Schnittstelle zwischen Controller und einer Kommunikationseinrichtung vorhanden.

EP-A-0 662 725 gibt eine Anordnung aus einem Batteriegehäuse mit Aufnahmen, Batterien und einer Ladeeinrichtung an. Die Vorrichtung kann in Gabelstaplern eingesetzt werden.

DE 18 55 446 U behandelt die Stromversorgung von Zügen mittels Batterien. Es wird vorgeschlagen, den Speicherraum im Zug so aufzuteilen, daß neben einer Batterie eine weitere Batterie oder eine Ladeeinrichtung untergebracht werden können. Diese sind in austauschbaren Behältern untergebracht.

EP-A-1 006 597 beschreibt eine Vorrichtung welche modulare Aufnahmen umfaßt, in denen eine Vielzahl von sekundären Batterien angeordnet ist. Zusätzlich existieren Kontrolleinrichtungen, die die elektrischen Parameter der einzelnen Batterien sowie der Batteriemodule überwachen. Die Kontrolleinrichtungen befinden sich in einem räumlich abgegrenzten Aufnahmebereich. Um die Module herum befindet sich ein äußeres Gehäuse.

**Aufgabe** der Erfindung ist es, ausgehend vom vorbeschriebenen Stand der Technik ein Batteriesystem zur Verfügung zu stellen, das bei gleichzeitiger Vermeidung von Rangierarbeiten hilft, die notwendigerweise durchzuführenden Wartungsarbeiten auf ein Minimum zu reduzieren.

Die **Lösung** der vorgenannten Aufgabe wird erreicht durch ein Modulsystem für Züge, umfassend eine Mehrzahl von unterschiedlich ausgebildeten Akkumulatoren (11) und Ladeeinrichtungen (14), die nach dem Baukastenprinzip zur Ausbildung eines Batteriesystems (1) miteinander kombiniert sind, wobei das Batteriesystem (1) eine mobile Aufnahmeeinheit (2) zur wahlweisen Aufnahme eines Akkumulators (11) und einer Ladeeinrichtung (14) aufweist und austauschbar an einem Wagen (27) eines Zuges (26) anordbar ist, wobei der Akkumulator (11) eine Kontrolleinheit (12) aufweist, die frei programmierbar ist und mittels welcher die Leistungsmerkmale des Akkumulators (11) und/oder dessen Betriebszustände erfaßbar sind, wobei in Abhängigkeit dieser von der Kontrolleinheit (12) festgestellten und an die Ladeeinrichtung (14) gelieferten Informationen der von der Ladeeinrichtung (14) gelieferte Ladestrom von der Ladeeinrichtung (14) einstellbar ist.

Im Falle einer defekten Batterie wird also im Unterschied zum Stand der Technik nicht nur die Batterie, sondern die gesamte Batterie-Einheit ausgetauscht. Ein Austausch der gesamten Batterie-Einheit kann in einfacher Weise auch vom Rangierpersonal vorgenommen werden, da dieses nicht zu überprüfen braucht, ob die eingesetzte Batterie und die damit unter Umständen gekoppelte Ladeeinrichtung aufeinander abgestimmt sind. Die auszutauschende Batterie-Einheit wird vielmehr gegen eine bereits vorbereitete und einsatzbereite Batterie-Einheit ausgetauscht. Um den Austauschvorgang zu erleichtern, ist vorzugsweise vorgesehen, daß die Batterie-Einheit mittels schnell zu bedienender Verbindungsmittel am Wagen oder Waggon des Zuges anordbar ist. Zu diesem Zweck können beispielsweise Schnellverschlüsse eingesetzt werden. Auf diese Weise wird erreicht, daß ein Austausch einer defekten Batterie-Einheit gegen eine neue Batterie-Einheit sehr schnell, beispielsweise in weniger als zwei Minuten durchgeführt werden kann.

Beim Zusammenstellen eines Zuges hält das Rangierpersonal eine nach Erfahrungswerten festzusetzende Anzahl von neuen Batterie-Einheiten vor. Wird nun beim Zusammenstellen eines neuen Zuges festgestellt, daß die eine oder andere Batterie eines Waggons oder Zuges defekt ist, so wird die diese defekte Batterie enthaltene Batterie-Einheit komplett gegen eine neue, vorgehaltene Batterie-Einheit ausgetauscht. Die defekte Batterie-Einheit kann sodann vom Rangierpersonal in die Wartung gegeben werden, wo dann eine Überprüfung und gegebenenfalls Reparatur der Batterie-Einheit bzw. der Batterie vorgenommen wird.

Mit dem erfindungsgemäß vorgeschlagenen Modulsystem wird es erstmals möglich, die Kosten für die notwendigerweise durchzuführenden Wartungsarbeiten auf ein Minimum zu reduzieren. Zudem hilft es, umfangreiche und unnötige Rangierarbeiten zu vermeiden. Das Rangierpersonal muß nämlich weder Waggons oder Wagen eines Zuges umrangieren, noch ist eine zeitaufwendige Kontrolle bezüglich der Kompatibilität von Batterie und Ladeeinrichtung erforderlich, denn wird das gesamte Batteriesystem als Paket ausgetauscht. Stellt das Rangierpersonal mithin fest, daß die Batterie eines Waggons oder Zuges defekt ist, so tauscht sie das gesamte Batteriesystem gegen ein neues Batteriesystem aus. Das neue Batteriesystem umfaßt eine Batterie sowie eine dazu kompatible Ladeeinrichtung, so daß eine diesbezügliche Kontrolle vom Rangierpersonal nicht vorgenommen werden muß, gleichzeitig aber sichergestellt ist, daß das neu eingesetzte Batteriesystem bestimmungsgemäß Verwendung finden kann. Im Unterschied zu vorbekannten Batteriesystemen zeichnet sich das Batteriesystem also dadurch aus, daß es mobil ist und wahlweise austauschbar an einem Wagen oder Waggon eines Zuges angeordnet werden kann.

Gemäß einem weiteren Merkmal der Erfindung weist die Aufnahmeeinheit des Batteriesystems baulich voneinander getrennte Aufnahmebereiche auf. In diesem Zusammenhang kann vorgesehen sein, daß die Aufnahmeeinheit einen ersten Aufnahmebereich für eine Batterie, insbesondere einen Akkumulator, und einen zweiten Aufnahmebereich für eine Ladeeinrichtung aufweist. Diese Aufnahmebereiche werden wartungsseitig mit einer entsprechenden Batterie und einer dazu kompatiblen Ladeeinrichtung bestückt. Das so vorbereitete Batteriesystem ist einsatzfertig verwendbar und wird vom Rangierpersonal beim Zusammenstellen eines Zuges mitgeführt. Stellt das Rangierpersonal bei der Zusammenstellung eines Zuges fest, daß das eine oder andere Batteriesystem eines zu verwendenden Wagens oder Waggons defekt ist, so wird das gesamte Batteriesystem gegen ein neues, vom Rangierpersonal mitgeführtes Batteriesystem ausgetauscht.

Gemäß einem weiteren Merkmal der Erfindung ist vorgesehen, daß die Aufnahmeeinheit einen dritten, zwischen dem ersten und dem zweiten Aufnahmebereich angeordneten Aufnahmebereich aufweist. Dieser Aufnahmebereich kann der Aufnahme einer Anschlußvorrichtung dienen, deren Funktion im weiteren noch erläutert werden wird.

Vorzugsweise ist der erste und der zweite Aufnahmebereich jeweils mit einer mittels einer Klappe verschließbaren Zugangsöffnung versehen. Diese Zugangsöffnung erlaubt einen Zugriff auf den jeweiligen Aufnahmebereich. Dabei sind die Zugangsöffnungen derart ausgebildet, daß durch sie hindurch eine Batterie bzw. eine Ladeeinrichtung in den jeweils zugehörigen Aufnahmebereich auf einfache Weise eingeschoben werden kann. Die Zugangsöffnungen können zum Schutz der von der Aufnahmeeinheit aufgenommenen Batterie bzw. Ladeeinrichtung mittels einer entsprechend ausgebildeten Klappe verschließbar sein.

Gemäß einem weiteren Merkmal der Erfindung ist vorgesehen, daß die Aufnahmeeinheit als ein ein Gehäuse bildendes Traggestell ausgebildet ist. Dieses Traggestell weist Anschlußbereiche zur Anordnung eines Wagens oder Waggons eines Zuges oder dergleichen auf, wobei zur Anordnung des Traggestells an einem Wagen oder Waggon eines Zuges schnellbedienbare Verschlußmittel dienen. Ein schneller Austausch des Batteriesystems wird auf diese Weise sichergestellt.

Die Batterie des vorgeschlagenen Batteriesystems verfügt über eine Kontrolleinheit. Diese Kontrolleinheit dient dazu, die Leistungsmerkmale der Batterie und/oder deren Betriebszustände zu erfassen und der Ladeeinrichtung zwecks Durchführung eines auf die Batterie angepaßten Ladevorganges zur Verfügung zu stellen. Die Batterie verfügt mithin in Form der Kontrolleinheit über eine eigene Intelligenz, was es ermöglicht, unterschiedliche Ladeeinrichtungen mit unterschiedlichen Batterien kombinieren zu können. Da der Ladeeinrichtung über die Kontrolleinheit der Batterie bekannt ist, um welchen Batterietyp es sich handelt, das heißt über welche Leistungsmerkmale die Batterie verfügt, kann über die Ladeeinrichtung ein entsprechender Ladevorgang, falls erforderlich, eingeleitet werden. Die Kontrolleinheit ist zudem in der Lage, den Betriebszustand bzw. die Betriebszustände der Batterie zu erfassen und diese Information gleichfalls an die Ladeeinrichtung weiterzugeben. Die Ladeeinrichtung ist mithin nicht nur über den Batterietyp, sondern auch über deren Betriebszustand informiert, so daß ein Aufladen der Batterie in ordnungsgemäßer Weise vorgenommen werden kann.

Anders als aus dem Stand der Technik bekannt, sind die Ladeeinrichtung und die Batterie des Batteriesystems nicht starr aufeinander abgestimmt, vielmehr ist eine freie Konfiguration möglich. Das Batteriesystem ist insofern modular aufgebaut, was bedeutet, daß Batterien mit unterschiedlichen Kapazitäten mit Ladeeinrichtungen unterschiedlicher Leistung wahlweise zusammengebracht werden können. Die Kontrolleinheit sorgt dafür, daß die Ladeeinrichtung in Abhängigkeit der festgestellten Leistungsmerkmale und/oder Betriebszustände einen Ladestrom liefert. Die Batterie verfügt mithin insoweit über eine eigene Intelligenz, was es ermöglicht, unterschiedliche Batterietypen mit unterschiedlichen Ladeeinrichtungstypen zu kombinieren, denn wird der von der Ladeeinrichtung bereitgestellte Ladestrom in Abhängigkeit der von der Batterie mittels der Kontrolleinheit festgestellten und gelieferten Informationen eingestellt.

Das vorbeschriebene Batteriesystem ermöglicht es, daß eine unter Umständen defekte Batterie vom Bedienpersonal gegen eine neue Batterie in einfacher Weise ausgetauscht werden kann, denn ist es im Unterschied zum Stand der Technik nicht erforderlich, daß das Bedienpersonal über Typ, Art und/oder Betriebszustand der neuen Batterie informiert ist. Die neu einzusetzende Batterie meldet sich vielmehr automatisch bei der zugehörigen Ladeeinrichtung an und meldet dieser ihre Leistungsmerkmale sowie ihren Betriebszustand. Die Ladeeinrichtung stellt daraufhin einen ordnungsgemäßen Ladestrom für die Batterie zur Verfügung. Damit bedarf es für eine Verwendung des Batteriesystems nicht einer besonderen Kenntnis bezüglich der eingesetzten Ladeeinrichtung bzw. bezüglich der eingesetzten Batterie seitens des Bedienpersonals. Aufwendige Kontroll- und Wartungsarbeiten können damit in vorteilhafter Weise vermieden werden, denn ist es für eine bestimmungsgemäße Verwendung des Batteriesystems ausreichend, wenn im Fall eines Batteriedefektes diese gegen eine neue durch das Bedienpersonal ausgetauscht wird, wobei es nicht erforderlich ist, die neu einzusetzende Batterie in Anpassung an die Ladeeinrichtung vorauszuwählen. Der Austausch nur der Batterie stellt eine alternative Ausgestaltungsform der Erfindung dar. Insoweit stellt das Batteriesystem zwei voneinander zu unterscheidende mögliche Austauschoptionen dar. So kann, wie vorstehend erläutert, das gesamte Batteriesystem, das als mobile Einheit ausgebildet ist, im Bedarfsfall wahlweise ausgetauscht werden. Alternativ hierzu ist es möglich, nur die Batterie des Batteriesystems auszutauschen, wobei ein Zugriff auf die auszutauschende Batterie über die mittels einer Klappe verschließbaren Zugangsöffnung des Aufnahmebereiches für die Batterie möglich ist. Da die auszutauschende Batterie gemäß vorbeschriebener Ausführungsalternative über eine eigene Intelligenz verfügt, ist eine nicht kompatible Verwendung von Ladeeinrichtung einerseits und ausgetauschter Batterie andererseits sicher ausgeschlossen. Über die Kontrolleinheit meldet sich die Batterie selbständig, das heißt automatisch bei der zugehörigen Ladeeinrichtung des Batteriesystems an, woraufhin sich die Ladeeinrichtung in Abhängigkeit der Betriebsparameter der neu eingesetzten Batterie selbsttätig einstellt.

Gemäß einem weiteren Merkmal der Erfindung ist das Batteriesystem durch eine gemeinsame Anschlußeinrichtung für die Ladeeinrichtung, die Batterie und die Kontrolleinrichtung gekennzeichnet. Das Batteriesystem verfügt mithin über eine Anschlußvorrichtung, an die sowohl die Ladeeinrichtung als auch die Batterie samt der daran angeordneten Kontrolleinrichtung wahlweise angeschlossen werden können. Es ist also nicht erforderlich, die Ladeeinrichtung in einem separaten Installationsschritt mit der Batterie zu verbinden. Sowohl die Ladeeinrichtung als auch die Batterie verfügen vorzugsweise über Anschlußstecker, die nach einem Einsetzen der Ladeeinrichtung und/oder der Batterie in das Batteriesystem mit der Anschlußvorrichtung verbunden sind. Über die Anschlußvorrichtung ergibt sich sodann der elektrische Kontakt zwischen Ladeeinrichtung einerseits und Batterie andererseits.

Gemäß einem weiteren Merkmal der Erfindung weist die Anschlußeinrichtung Anschlüsse für einen Verbraucher auf. Diese Ausgestaltung erlaubt es, das Batteriesystem im Bedarfsfall als Ganzes auszutauschen. Bei einer Neuinstallation eines Batteriesystems wird der elektrische Kontakt zwischen Verbraucher einerseits und Batteriesystem andererseits über die Anschlußvorrichtung des Batteriesystems hergestellt. Bei bestehendem elektrischen Kontakt zwischen Batteriesystem und Verbraucher können gleichwohl in vorbeschriebener Weise die Einzelbauteile des Batteriesystems, das heißt die Ladeeinrichtung und/oder die Batterie in einfacher Weise ausgetauscht und über die gemeinsame Anschlußvorrichtung miteinander in elektrischen Kontakt gebracht werden, wodurch dann auch ein elektrischer Kontakt mit dem Verbraucher ausgebildet wird.

Die vorbeschriebene Konstruktion erleichtert mithin sowohl den Austausch des Batteriesystems als solches, als auch den Austausch seiner Komponenten, sprich der Ladeeinrichtung und/oder der Batterie.

Gemäß einem weiteren Merkmal der Erfindung ist das Batteriesystem durch ein Traggestell gekennzeichnet, welches die Ladeeinrichtung, die Batterie mit der daran angeordneten Kontrolleinheit und die Anschlußvorrichtung aufnimmt. Dieses Traggestell ist vorzugsweise in standardisierter Größe ausgebildet und kann über entsprechende Halteeinrichtungen beispielsweise unterhalb eines Zugwagens bzw. eines Zugwaggons angeordnet werden. Das Traggestell kann beispielsweise nach Art eines Gehäuses ausgebildet sein, wobei dieses Gehäuse separat ausgebildete Aufnahmebereiche, das heißt Kammern für die Ladeeinrichtung, die Batterie mit der daran angeordneten Kontrolleinheit und die Anschlußvorrichtung aufweist. Dabei können die Kammern derart ausgebildet sein, daß ein Vertauschen der Kammern durch das Bedienpersonal ausgeschlossen ist, das heißt die Batterie immer nur in der dafür vorgesehenen Kammer bzw. die Ladeeinrichtung immer nur in der dafür vorgesehenen Kammer angeordnet werden kann.

Die Kammern, das heißt Aufnahmebereiche für die Ladeeinrichtung bzw. die Batterie sind einseitig offen ausgebildet und mit einer Klappe verschließbar. Die Klappe kann insoweit als Installationsklappe bezeichnet werden, die im Bedarfsfall vom Bedien- und/oder Wartungspersonal geöffnet werden kann. Bei geöffneter Klappe kann die Batterie bzw. die Ladeeinrichtung aus dem Traggestell des Batteriesystems herausgenommen und durch eine neue Batterie bzw. eine neue Ladeeinrichtung ersetzt werden.

Gemäß einem weiteren Merkmal der Erfindung verfügt die Anschlußvorrichtung über eine Kommunikationsschnittstelle. Diese Kommunikationsschnittstelle verbindet die Kontrolleinheit der Batterie mit der Ladeeinrichtung. Die Kommunikationsschnittstelle dient dem Informationsaustausch zwischen Ladeeinrichtung einerseits und Kontrolleinheit andererseits.

Die Kontrolleinheit der Batterie ist gemäß einem weiteren Vorschlag der Erfindung frei programmierbar. Bedienerseitig können mithin Ladezyklen oder dergleichen frei vorgegeben werden.

Das Modulsystem umfasst eine Mehrzahl von unterschiedlich ausgebildeten Batterien und Ladeeinrichtungen, die nach dem Baukastenprinzip zur Ausbildung eines Batteriesystems gemäß der vorstehenden Erläuterungen miteinander kombinierbar sind. Vorteil eines solchen Modulsystems ist, daß die zur Verfügung stehenden Ladeeinrichtungen mit den zur Verfügung stehenden Batterien frei kombiniert und wahlweise zusammengestellt werden können. Der erforderliche Wartungs- bzw. Prüfaufwand wird so auf ein Minimum reduziert.

Weitere Vorteile und Merkmale der Erfindung ergeben sich aus der Beschreibung anhand der nachfolgenden Figuren, wobei die Figuren zeigen:
- Fig. 1: in einer schematischen Darstellung das Batteriesystem in einer ersten Ansicht;
- Fig.2: in einer perspektivischen Darstellung das Batteriesystem in einer zweiten Ansicht;
- Fig. 3: in einem Ablaufdiagramm die Funktionsweise des Batteriesystems;
- Fig. 4: in einer schematischen Darstellung die Zusammensetzung eines Zuges aus neun Waggons;
- Fig. 5: in einer schematischen Darstellung die Umrangierung des in Fig. 4 gezeigten Zuges und
- Fig. 6: in einer schematischen Darstellung der fertig umrangierte Zug.

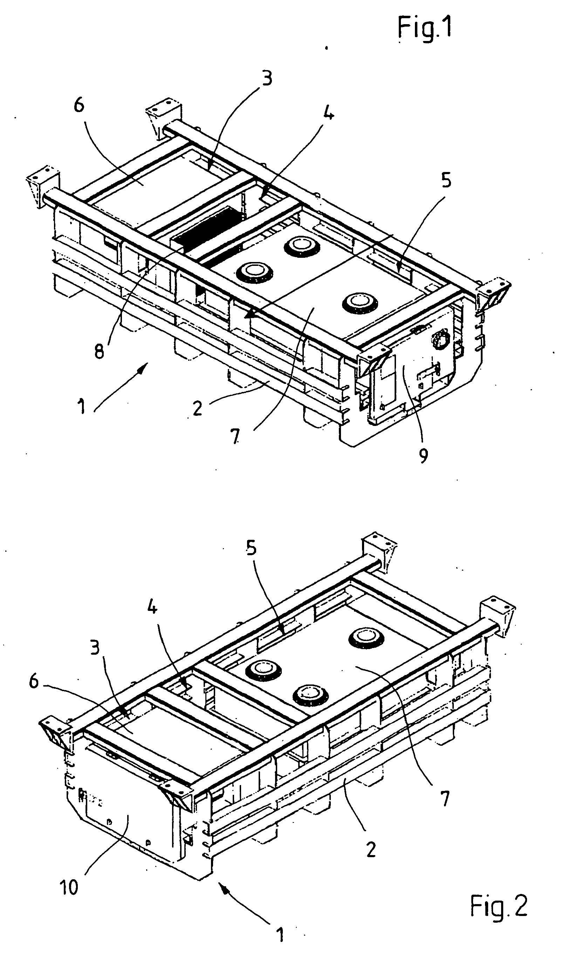

Die Fign. 1 und 2 zeigen in jeweils unterschiedlicher Ansicht das Batteriesystem 1. Das Batteriesystem 1 umfaßt eine Aufnahmeeinheit 2 zur wahlweisen Aufnahme einer Batterie, einer Ladeeinrichtung und/oder dergleichen. Die Aufnahmeeinheit 2 ist vorzugsweise als ein ein Gehäuse bildendes Traggestell ausgebildet, welches Traggestell beispielsweise aus einem Skelettrahmen aus U- oder C-Profilen gebildet sein kann.

Die Aufnahmeeinheit 2 bildet insgesamt drei Kammern, das heißt Aufnahmebereiche 3 bis 5 aus, wobei der Aufnahmebereich 3 der Aufnahme einer Ladeeinrichtungsbox, die ihrerseits die Ladeeinrichtung trägt, der Aufnahmebereich 4 der Aufnahme einer Anschlußvorrichtung 8 und der Aufnahmebereich 5 der Aufnahme einer Akkumulatorbox 7, die ihrerseits einen Akkumulator beinhaltet, dient.

Die Aufnahmebereiche 3 und 5 sind einseitig offen ausgebildet und mittels jeweils einer Klappe 9 bzw. 10 verschließbar. Über diese Klappen 9 bzw. 10, die als Installationsklappen bezeichnet werden können, sind die Aufnahmebereiche 3 bzw. 5 von außen zugänglich.

Die Aufnahmeeinheit 2 des Batteriesystems 1 ist als mobile Einheit ausgebildet und austauschbar an einem Wagen eines Zuges oder dergleichen anordbar, wobei zur Anordnung vorzugsweise schnell bedienbare Verbindungsmittel Verwendung finden. Auf diese Weise ist sichergestellt, daß die Aufnahmeeinheit 2 eines Batteriesystems 1 auf einfache und vor allem in schneller Weise ausgewechselt, das heißt ausgetauscht werden kann.

Die im weiteren noch zu beschreibende Ladeeinrichtung ist vorzugsweise innerhalb einer Ladeeinrichtungsbox 6 angeordnet. Diese Ladeeinrichtungsbox 6 kann in einfacher Weise aus dem Aufnahmebereich 3 herausgenommen bzw. in diesen eingeführt werden. Nach einem ordnungsgemäßen Einbringen der die Ladeeinrichtung aufnehmenden Ladeeinrichtungsbox 6 in den Aufnahmebereich 3 ist die Ladeeinrichtung über entsprechende Steckerkontakte mit der in dem Aufnahmebereich 4 befindlichen Anschlußeinrichtung 8 elektrisch verbunden.

Die Batterie, das heißt der Akkumulator ist ebenso wie die Ladeeinrichtung innerhalb einer boxartigen Aufnahme angeordnet. Neben dem Akkumulator nimmt diese Akkumulatorbox 7 des weiteren eine in den Fign. nicht näher dargestellte Kontrolleinheit auf. Diese Kontrolleinheit dient dazu, den Akkumulatortyp, das heißt den eingesetzten Akkumulator nach Art und Größe zu bestimmen sowie den Betriebszustand des Akkumulators zu erfassen. Nach Einbringen der den Akkumulator bzw. die Kontrolleinheit aufnehmenden Akkumulatorbox 7 in den Aufnahmebereich 5 ist der Akkumulator über entsprechend ausgebildete Stecker an die in dem Aufnahmebereich 7 befindliche Anschlußvorrichtung 8 elektrisch angeschlossen. Über die Anschlußvorrichtung 8 stehen mithin die Ladeeinrichtung und der Akkumulator in elektrischer Verbindung. Zwecks erleichterter Einführung der Akkumulatorbox 7 in den dafür vorgesehenen Aufnahmebereich 5 trägt die Akkumulatorbox 7 unterseitig Schwerlastrollen, über welche diese in einfacher Weise in den Aufnahmebereich 5 eingebracht bzw. aus diesen herausgezogen werden kann. Zwecks lagesicherer Anordnung der Akkumulatorbox 7 innerhalb des dafür vorgesehenen Aufnahmebereichs 5 ist vorzugsweise eine Verriegelung vorgesehen, die beispielsweise aus seitlich angeordneten Schnellverschlüssen gebildet sein kann und ein Verrasten der Akkumulatorbox 7 gegenüber der Aufnahmeeinheit 2 bewirkt. Die Verriegelung bzw. Entriegelung kann beispielsweise über unterhalb der Akkumulatorbox 7 angeordnete Krallen erfolgen, die beispielsweise mittels der Arme eines herkömmlichen Gabelstaplers bedienbar sind.

Das Batteriesystem ist gegenüber den aus dem Stand der Technik bekannten Batteriesystemen insofern von Vorteil, als daß es auf einfache Weise ausgetauscht werden kann. Da die Aufnahmeeinheit als mobile Einheit ausgebildet ist, kann diese im Bedarfsfall in einfacher Weise ausgetauscht werden. Zudem ist es möglich, entweder nur die Batteriebox 7, das heißt den Akkumulator oder die Ladeeinrichtungsbox 6, das heißt die Ladeeinrichtung, auszutauschen, wobei ein solcher Austausch, das heißt Wechsel aufgrund der Ausgestaltung in sehr kurzer Zeit erfolgen kann. So erlaubt das Batteriesystem einen Austausch sowohl der Akkumulatorbox 7 als auch der Ladeeinrichtungsbox 6 innerhalb von zwei Minuten.

Von Vorteil des Batteriesystems 1 ist zudem, daß es modular aufgebaut ist. Modular bedeutet in diesem Zusammenhang, daß Batterien, das heißt Akkumulatoren mit verschiedenen Kapazitäten mit Ladeeinrichtungen unterschiedlicher Leistungen in der Aufnahmeeinheit 2 zusammengeführt werden können. Die Aufnahmeeinheit 2 ist dabei als Standardtraggestell ausgebildet, welches nach Art, Form und Größe unterschiedlich ausgestaltete Ladeeinrichtungsboxen 6 und Akkumulatorboxen 7 aufnehmen kann. Da der Akkumulator erfindungsgemäß über eine eigene Intelligenz in Form einer Kontrolleinheit verfügt, erlaubt es das Batteriesystem 1, unterschiedliche Akkumulatortypen mit unterschiedlichen Ladeeinrichtungstypen wahlweise zu kombinieren. Der Akkumulator meldet sich über seine Kontrolleinheit selbständig bei der Ladeeinrichtung an, woraufhin diese in Abhängigkeit der Akkumulatorbetriebsparameter die Ladeeinrichtungsgrößen selbsttätig einstellt. Im Falle eines Defekts eines Akkumulators oder einer Ladeeinrichtung kann mithin in einer ersten Vorgehensweise entweder das gesamte Batteriesystem oder aber nur der defekte Akkumulator und/oder die defekte Ladeeinrichtung ausgetauscht werden. Welche Vorgehensweise auch immer gewählt wird, durch die erfindungsgemäße Ausgestaltung ist in jedem Fall sichergestellt, daß bei gleichzeitiger Wahrung der Kompatibilität zwischen Akkumulator und Ladeeinrichtung ein schneller Austausch ermöglicht ist.

Die Akkumulatorbox nimmt im einzelnen einen Akkumulator, eine Kontrolleinheit, Sicherungen sowie einen Lasttrenner auf, welche Komponenten in den Fign. 1 und 2 nicht explizit dargestellt sind. Dabei kann die Akkumulatorbox 7 wahlweise mit einem Akkumulator in einem Spannungsbereich von 24 bis 110 Volt und einem Kapazitätsbereich von 80 bis 360 Ah bestückt werden. Die innerhalb der Akkumulatorbox 7 angeordnete Kontrolleinheit erfaßt die Leistungsmerkmale des in der Akkumulatorbox 7 befindlichen Akkumulators und liefert eine diesbezüglich entsprechende Information über die Anschlußeinrichtung 8 an die Ladeeinrichtung. Die Kontrolleinheit kann zudem den momentanen Betriebszustand des Akkumulators erfassen, wobei die diesbezügliche Information gleichfalls über die Anschlußvorrichtung 8 an die Ladeeinrichtung 6 übergeben wird.

Wenn in das Batteriesystem 1 eine neue Akkumulatorbox 7, das heißt ein neuer Akkumulator eingeführt wird, so meldet sich der in der Akkumulatorbox 7 befindliche Akkumulator selbsttätig, das heißt automatisch mittels der Kontrolleinrichtung bei der Ladeeinrichtung an. Diese verfügt sodann über die notwendigen Informationen hinsichtlich Akkumulatortyp und Betriebszustand und kann mit einem auf den Akkumulator abgestimmten Ladevorgang beginnen, sofern erforderlich.

Ebenso wie die Akkumulatorbox 7 ist auch die Ladeeinrichtungsbox 6 austauschbar innerhalb der Aufnahmeeinheit 2 angeordnet. Sie kann wahlweise mit Weitenspannungsladegeräten im Bereich von 24 Volt bis 110 Volt und einem Leistungsbereich von 1 kW bis 30 kW bestückt werden.

Sowohl die Akkumulatorbox 7 als auch die Ladeeinrichtungsbox 6 können in einfacher Weise ausgetauscht werden. Dabei ist die Konfiguration des Batteriesystems 1 in vorteilhafter Weise frei wählbar, denn können unterschiedliche Ladeeinrichtungsboxen, das heißt unterschiedliche Ladeeinrichtungen mit unterschiedlichen Akkumulatorboxen, das heißt unterschiedlichen Akkumulatoren wahlweise kombiniert werden. Über die Akkumulatorkontrolleinheit ist der Akkumulator spezifiziert, der Akkumulator verfügt mithin selbst über ein "Gedächtnis" sowie über "Intelligenz", was eine frei wählbare Konfiguration von Akkumulator einerseits und Ladeeinrichtung andererseits ermöglicht. Anders als aus dem Stand der Technik bekannt, übernimmt also nicht die Ladeeinrichtung eine Identifizierung des daran angeschlossenen Akkumulators, diese wird vom Akkumulator vielmehr selbst bereitgestellt.

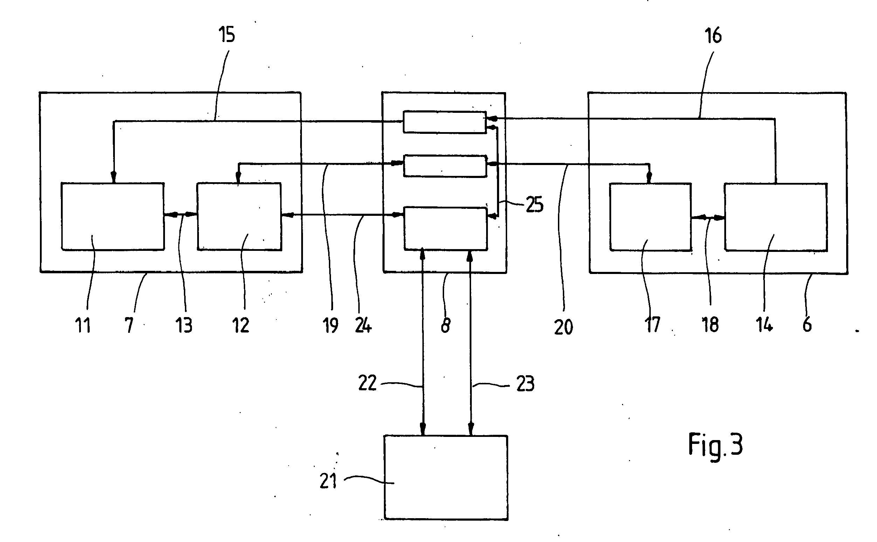

Fig. 3 zeigt in einer schematischen Diagrammdarstellung die Funktionsweise des Batteriesystems 1.

Gezeigt ist hier, daß die Akkumulatorbox 7 als wesentliche Bestandteile einen Akkumulator 11 sowie eine Kontrolleinheit 12 umfaßt. Akkumulator 11 und Kontrolleinheit 12 stehen dabei in kommunikationstechnischer Verbindung, wie mit dem Pfeil 13 angedeutet. Die Anschlußvorrichtung 8 verbindet den Akkumulator 11 mit der innerhalb der Ladeeinrichtungsbox 6 angeordneten Ladeeinrichtung 14, wie in Fig. 3 mittels der Pfeile 15 und 16 dargestellt. Die Ladeeinrichtung 14 steht ihrerseits in kommunikationstechnischer Verbindung mit einer Ladekontrolleinrichtung 17, wie der Pfeil 18 andeutet. Die Ladekontrolleinrichtung 17 steht über die Anschlußvorrichtung 8 mit der Kontrolleinrichtung 12 des Akkumulators 11 in kommunikationstechnischer Verbindung. Dargestellt ist diese kommunikationstechnische Verbindung durch die Pfeile 19 und 20.

Ein Verbraucher 21 steht gleichfalls über die Anschlußeinrichtung 8 mit dem Akkumulator 7 bzw. der Kontrolleinheit 12 in Verbindung, wie durch die Pfeile 22 und 23 angedeutet, wobei der Pfeil 22 für die kommunikationstechnische Verbindung und der Pfeil 23 für die elektrische Verbindung steht. Mit den Pfeilen 24 und 25 ist die interne Kommunikation innerhalb der Anschlußvorrichtung 8 bzw. die kommunikationstechnische Verbindung zwischen Verbraucher 21 und Kontrolleinheit 12 andererseits identifiziert.

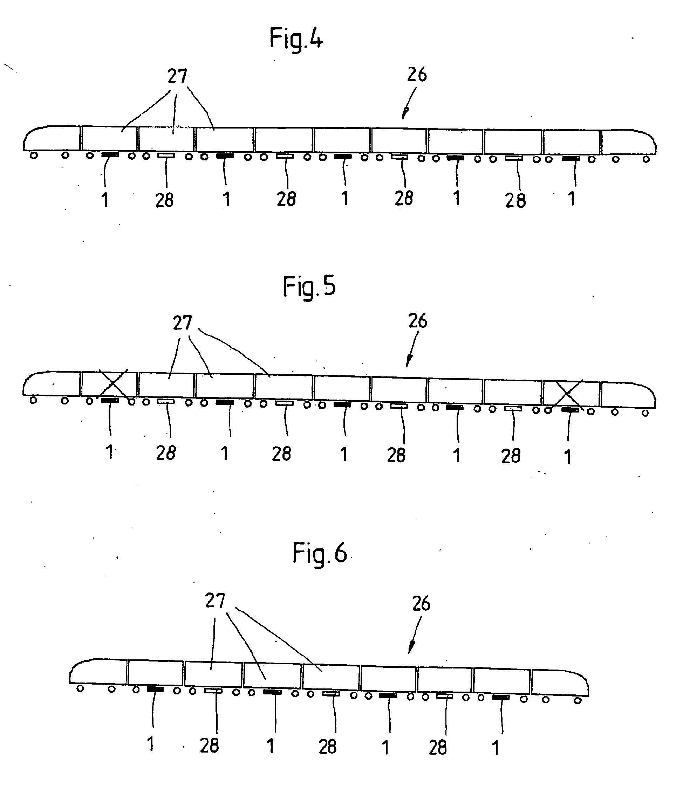

Die Fign. 4 bis 6 zeigen anhand eines Praxisbeispiels die Verwendung des Batteriesystems 1.

Fig. 4 zeigt in schematischer Darstellung einen Zug 26, der aus insgesamt neun Wagen 27 gebildet ist. Jeder dieser Wagen verfügt unterseitig über einen Rahmen 28, der der Aufnahme eines Batteriesystems 1 dient.

In dem in den Fign. 4 bis 6 dargestellten Ausführungsbeispiel ist die Leistung des Batteriesystems so ausgelegt, daß das Batteriesystem insgesamt maximal zwei Wagen 27 versorgen kann. Da der in Fig. 4 gezeigte Zug aus insgesamt neun Wagen 27 besteht, sind insgesamt fünf Batteriesysteme 1 vorgesehen.

Werden nun aus Auslastungs- oder Wartungsgründen zwei Wagen 27 entfernt, wie in Fig. 5 dargestellt, so verbleiben im Zug noch insgesamt sieben Wagen 27, jedoch insgesamt nur drei Batteriesysteme 1, deren Leistung nicht ausreichen würde, um die Wagen 27 mit der notwendigen Energie zu versorgen. Aus diesem Grunde bedarf es einer Umrüstung der Batteriesysteme 1, wobei dies in der Vergangenheit zu einem erheblichen Aufwand für das Wartungspersonal geführt hat. Gemäß dem neuen Konzept, das heißt dem neuen Batteriesystem 1 können die Batterien, das heißt Akkumulatoren, bzw. die Ladegeräte, auf einfache Weise auf die verbleibenden sieben Wagen 27 verteilt werden.

Wie Fig. 5 erkennen läßt, werden zur Minimierung der Rangierarbeiten der erste und der letzte Wagen 27 entfernt. Bezüglich der verbleibenden sieben Wagen 27 werden die notwendigerweise insgesamt vier vorzusehenden Batteriesysteme 1 verteilt, wobei der erste Wagen, der dritte Wagen, der fünfte Wagen und der siebte Wagen jeweils ein Batteriesystem 1 erhält. Das Bestücken dieser Wagen mit einem Batteriesystem 1 kann in der vorbeschriebenen Weise schnell, einfach und kostengünstig durchgeführt werden, so daß es nicht, wie in der Vergangenheit erforderlich, notwendig ist, Rangierarbeiten der einzelnen Wagen 27 in der Weise vorzunehmen, daß das Ergebnis der Rangierarbeiten die in Fig. 6 gezeigte Zugkonfiguration ist. Vielmehr können die einzelnen Wagen 27 des Zuges unter Minimierung der Rangierarbeiten zusammengestellt werden, wobei im Anschluß an diese Rangierarbeiten die Zuordnung der Batteriesysteme vorgenommen wird. Da die Zuordnung bzw. der Austausch der Batteriesysteme in einfacher Weise vorgenommen werden kann, erweist sich die mit dem Batteriesystem zur Verfügung gestellte Konfigurationsmöglichkeit als besonders einfach durchführbar und damit im Unterschied zum Stand der Technik als weniger kostenaufwendig.

Das anhand der Fign. vorbeschriebene Ausführungsbeispiel soll lediglich der näheren Erläuterung dienen und wirkt insofern nicht beschränkend. Insbesondere liegt es im Rahmen der Erfindung, das Batteriesystem auch für andere Zwecke als für Wagen oder Waggons eines Zuges einzusetzen.

### Bezugszeichenliste

- 1: Batteriesystem
- 2: Aufnahmeeinheit
- 3: Aufnahmebereich
- 4: Aufnahmebereich
- 5: Aufnahmebereich
- 6: Ladeeinrichtungsbox
- 7: Akkumulatorbox
- 8: Anschlußvorrichtung
- 9: Klappe
- 10: Klappe
- 11: Akkumulator
- 12: Kontrolleinheit
- 13: Pfeil
- 14: Ladeeinrichtung
- 15: Pfeil
- 16: Pfeil
- 17: Ladekontrolleinrichtung
- 18: Pfeil
- 19: Pfeil
- 20: Pfeil
- 21: Verbraucher
- 22: Pfeil
- 23: Pfeil
- 24: Pfeil
- 25: Pfeil
- 26: Zug
- 27: Wagen
- 28: Rahmen

## Patentansprüche

1. Modulsystem für Züge, umfassend eine Mehrzahl von unterschiedlich ausgebildeten Akkumulatoren (11) und Ladeeinrichtungen (14), die nach dem Baukastenprinzip zur Ausbildung eines Batteriesystems (1) miteinander kombiniert sind, wobei das Batteriesystem (1) eine mobile Aufnahmeeinheit (2) zur wahlweisen Aufnahme eines Akkumulators (11) und einer Ladeeinrichtung (14) aufweist und austauschbar an einem Wagen (27) eines Zuges (26) anordbar ist, wobei der Akkumulator (11) eine Kontrolleinheit (12) aufweist, die frei programmierbar ist und mittels welcher die Leistungsmerkmale des Akkumulators (11) und/oder dessen Betriebszustände erfaßbar sind, wobei in Abhängigkeit dieser von der Kontrolleinheit (12) festgestellten und an die Ladeeinrichtung (14) gelieferten Informationen der von der Ladeeinrichtung (14) gelieferte Ladestrom von der Ladeeinrichtung (14) einstellbar ist.

2. Modulsystem nach Anspruch 1, **dadurch gekennzeichnet, daß** die Aufnahmeeinheit (2) baulich voneinander getrennte Aufnahmebereiche (3, 4, 5) aufweist.

3. Modulsystem nach Anspruch 1 oder 2, **dadurch gekennzeichnet, daß** die Aufnahmeeinheit einen ersten Aufnahmebereich (3) für den Akkumulator (11) und einen zweiten Aufnahmebereich (5) für die Ladeeinrichtung (14) aufweist.

4. Modulsystem nach Anspruch 3, **dadurch gekennzeichnet, daß** die Aufnahmeeinheit (2) einen dritten, zwischen dem ersten und den zweiten Aufnahmebereich (3, 5) angeordneten Aufnahmebereich (4) aufweist.

5. Modulsystem nach Anspruch 3, **dadurch gekennzeichnet, daß** der erste und der zweite Aufnahmebereich (3, 5) jeweils eine mit einer Klappe (9, 10) verschließbare Zugangsöffnung aufweist.

6. Modulsystem nach einem der vorhergehenden Ansprüche, **dadurch gekennzeichnet, daß** die Aufnahmeeinheit (2) als ein ein Gehäuse bildendes Traggestell ausgebildet ist.

7. Modulsystem nach Anspruch 6, **dadurch gekennzeichnet, daß** das Traggestell Anschlußbereiche zur Anordnung an einen Wagen (27) eines Zuges (26) oder dergleichen aufweist.

8. Modulsystem nach einem der vorhergehenden Ansprüche, **gekennzeichnet durch** eine gemeinsame Anschlußvorrichtung (8) für die Ladeeinrichtung (14), den Akkumulator (11) und die Kontrolleinheit (12).

9. Modulsystem nach Anspruch 8, **dadurch gekennzeichnet, daß** die Anschlußvorrichtung (8) Anschlüsse für einen Verbraucher aufweist.

10. Modulsystem nach Anspruch 8 oder 9, **dadurch gekennzeichnet, daß** die Anschlußvorrichtung (8) eine Kommunikationsschnittstelle aufweist.

## Claims

1. Modular system for trains, comprising a plurality of differently configured accumulators (11) and charging devices (14) which are combined with each other to form a battery system (1), using the modular principle, wherein said battery system (1) includes a mobile receiving unit (2) for selectively receiving an accumulator (11) and a charging device (14) and is adapted for being arranged for replacement on a wagon (27) of a train (26), wherein the accumulator (11) includes a control unit (12) which is freely programmable and by which the performance characteristics of the accumulator (11) and/or the operating conditions thereof are detectable, wherein in dependence on the information obtained by this control unit (12) and delivered to the charging device (14) the charging current delivered from the charging device (14) is adjustable by the charging device (14).

2. Modular system according to claim 1, **characterized in that** the receiving unit (2) includes receiving areas (3, 4, 5) which are structurally separate from each other.

3. Modular system according to claim 1 or 2, **characterized in that** the receiving unit includes a first receiving area (3) for the accumulator (11) and a second receiving area (5) for the charging device (14).

4. Modular system according to claim 3, **characterized in that** the receiving unit (2) includes a second receiving area (4) which is arranged between the first and the second receiving areas (3, 5).

5. Modular system according to claim 3, **characterized in that** the first and the second receiving areas (3, 5) each include an access opening which can be closed by a flap (9, 10).

6. Modular system according to one of the preceding claims, **characterized in that** the receiving unit (2) is formed as a bearer frame which forms a housing.

7. Modular system according to claim 6, **characterized in that** the bearer frame includes connecting portions for the arrangement on a wagon (27) of a train (26) or the like.

8. Modular system according to one of the preceding claims, **characterized by** a common connection device (8) for the charging device (14), the accumulator (11) and the control unit (12).

9. Modular system according to claim 8, **characterized in that** the connection device (8) includes connections for a consumer.

10. Modular system according to claim 8 or 9, **characterized in that** the connection device (8) includes a communication interface.

## Revendications

1. Système modulaire pour trains comprenant une multitude d'accumulateurs configurés différemment (11) et de dispositifs de chargement (14) qui sont combinés l'un à l'autre selon le principe modulaire pour former un système de batterie (1), le système de batterie (1) présentant une unité de logement mobile (2) pour le logement au choix d'un accumulateur (11) et d'un dispositif de chargement (14) et qui peut être placé de manière interchangeable sur un wagon (27) d'un train (26), l'accumulateur (11) présentant une unité de contrôle (12) qui est programmable librement et au moyen de laquelle les caractéristiques de puissance de l'accumulateur (11) et/ou ses états de fonctionnement pouvant être détectés, cependant qu'en fonction de ces informations constatées par l'unité de contrôle (12) et délivrées au dispositif de chargement (14) le courant de charge délivré par le dispositif de chargement (14) peut être réglé.

2. Système modulaire selon la revendication 1, **caractérisé en ce que** l'unité de logement (2) présente des zones de logement (3, 4, 5) séparées l'une de l'autre sur le plan de la construction.

3. Système modulaire selon la revendication 1 ou 2, **caractérisé en ce que** l'unité de logement présente une première zone de logement (3) pour l'accumulateur (11) et une seconde zone de logement (5) pour le dispositif de chargement (14).

4. Système modulaire selon la revendication 3, **caractérisé en ce que** l'unité de logement (2) présente une troisième zone de logement (4) placée entre la première zone de logement et la seconde zone de logement (3, 5).

5. Système modulaire selon la revendication 3, **caractérisé en ce que** la première et la seconde zone de logement (3, 5) présente respectivement chacune une ouverture d'accès pouvant être fermée avec un volet (9, 10).

6. Système modulaire selon l'une des revendications précédentes, **caractérisé en ce que** l'unité de logement (2) est configurée comme un cadre porteur qui forme un boîtier.

7. Système modulaire selon la revendication 6, **caractérisé en ce que** le cadre porteur présente des zones de raccord pour raccorder à un wagon (27) d'un train (26) ou équivalent.

8. Système modulaire selon l'une des revendications précédentes, **caractérisé par** un dispositif de raccord commun (8) pour le dispositif de chargement (14), l'accumulateur (11) et l'unité de contrôle (12).

9. Système modulaire selon la revendication 8, **caractérisé en ce que** le dispositif de raccord (9) présente des raccords pour un consommateur.

10. Système modulaire selon la revendication 8 ou 9, **caractérisé en ce que** le dispositif de raccord (8) présente une interface de communication.
